# EUROPEAN PATENT SPECIFICATION

(11) **EP 1 953 471 B1**
(45) Date of publication and mention of the grant of the patent: **20.04.2011**
(21) Application number: 08150824.4
(22) Date of filing: 30.01.2008
(51) Int. Cl.: F24F 11/00

(54) **Data writing system and method for multi-type air conditioning system**
Datenschreibsystem und Verfahren für Mehrsystem-Klimaanlagen
Système d'écriture de données et procédé pour système de climatisation à unités multiples

(30) Priority: 01.02.2007 KR 20070010788
(43) Date of publication of application: 06.08.2008
(73) Proprietor: LG Electronics Inc., Seoul 150-721 (KR)
(72) Inventor: Han, Jong-Hyun, Seoul (KR); Youn, Sang-Chul, Seoul (KR); Jeon, Duck-Gu, Seoul (KR)
(74) Representative: Vossius & Partner

(56) References cited:
- JP-A- 2006 038 369
- JP-A- 2006 349 307
- US-A1- 2004 049 320
- US-A1- 2006 058 923

## Description

The present invention relates to a multi-type air conditioning system and a data writing system and method therefor, and more particularly, to a multi-type air conditioning system and data writing system as described in claim 1 and method therefor as described in claim 11 which allows system management by generating data for each system device upon conforming the valid association thereof.

With a recent increase in the use of air conditioning systems, air conditioning systems are now used in most buildings and homes. As one type of air conditioning system, so-called "multi-type air conditioners" include indoor units disposed in each room of a home or in each office in an office building, and an outdoor unit shared by and connected to the indoor units.

Hereinafter, a multi-type air conditioning system is referred to as a system comprised of a plurality of multi-type air conditioners.

The multi-type air conditioning system (see for example patent document US-2004/049320 A) includes a local controller which detects the operation status of the plurality of multi-type air conditioners and, according to the detection, controls the plurality of air conditioners via a gateway.

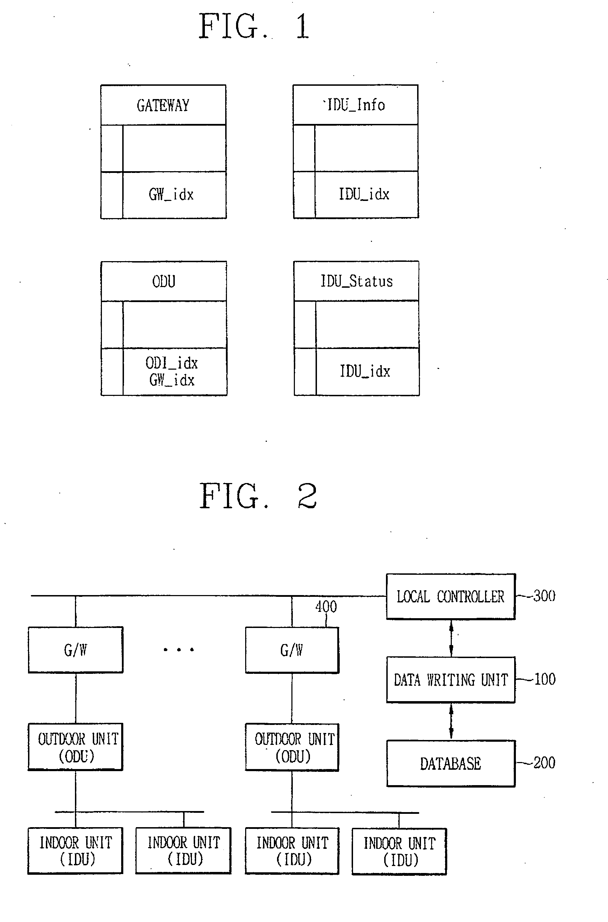

In the multi-type air conditioning system, setting information and status information related to each of a gateway, an outdoor unit and an indoor unit are written into a table, and as shown in Fig. 1, this data is composed as an independent table according to each device.

That is, as shown in Fig. 1, each device is distinguished from each other via an identifier for each of the gateway, the outdoor unit ODU and the indoor unit IDU. And, a gateway identifier is included in the outdoor unit's table, showing the top and bottom relationship of a hierarchy.

Here, each of the identifiers is required information. However, there is a need to manage an application that stores such data so as to maintain its consistency, considering that the identifiers can be redundant since there is no restriction on the value of the identifiers and that an identifier of an upper hierarchy which does not exist can be included.

However, as described above, if redundant setting information and status information related to the multi-type air conditioners exists, a problem regarding the stored data may be found, but it is difficult to resolve such error, and the like.

Further, since no association between such data is specified, data searching and addition/deletion need to be performed according to a method defined by a local controller using the data. Since redundant data may be used when data is added, such data together with data of a non-existing device may remain in a table, thereby not guaranteeing the data integrity.

Therefore, in order to solve those problems of the related art, it is an object of the present invention to provide a multi-type air conditioning system and a data writing method thereof which can enhance service inquiry and service usage performance by associating data related to each device (for data that was otherwise independently maintained) and performing management thereof, while allowing the deletion of any redundant data, and writing data to form a hierarchical structure through reference checking.

To achieve these and other objects and advantages and in accordance with the purpose of the present invention, as embodied and broadly described herein, in a multi-type air conditioning system having one or more multi-type air conditioner groups each provided with a local controller connected to a plurality of multi-type air conditioners via a gateway, and configured to tabulate setting information and status information related to each of the one or more multi-type air conditioner groups as a table, there is provided a data writing system and method according to claim 1 and claim 11 respectively.

Here, when data is to be added, the data writing unit is configured to abstract an identifier from the corresponding data and to block data addition by a violation of a foreign key restriction if the corresponding data is determined to be unreferenced data by performing a check using the abstracted identifier. When data is to be added, the data writing unit is configured to abstract an identifier from the corresponding data and to add the corresponding data if the corresponding data is determined not to be redundant data and also determined to be referenced data by using the abstracted identifier. When data is to be deleted, the data writing unit is configured to delete the corresponding data together with any data referring to the corresponding data.

To achieve these and other advantages and in accordance with the purpose of the present invention, as embodied and broadly described herein, there is also provided a data writing method for a multi-type air conditioning system including a step of writing setting information and status information related to each of one or more multi-type air conditioner groups as a table, comprising: writing the setting information and status information by tabulating a hierarchical relationship between system devices through checking their reference, and storing the written data in a table.

Here, the step of writing data by tabulating a hierarchical relationship between the system devices through reference checking comprises: writing setting information and status information related to an outdoor unit by specifying a primary key of a gateway table as a foreign key; writing setting information and status information related to each indoor unit by specifying a primary key of the setting information and status information related to the outdoor unit as a foreign key; and writing setting information and status information related to each indoor unit for monitoring and other information of multi-type of air conditioners by specifying a primary key of the setting information and status information related to each indoor unit as a foreign key.

The accompanying drawings, which are included to provide a further understanding of the invention and are incorporated in and constitute a part of this specification, illustrate embodiments of the invention and together with the description serve to explain the principles of the invention.
Figure 1 is a diagram schematically illustrating a data structure for a related art multi-type air conditioning system;
Figure 2 is a schematic block diagram illustrating the organization of a multi-type air conditioning system to which the data writing system and method according to the present invention are applied;
Figure 3 is a diagram schematically illustrating a data structure for the multi-type air conditioning system according to the present invention;
Figure 4 is a flowchart illustrating an operation when data is added in the multi-type air conditioning system of Fig. 2;
Figure 5 is a flowchart illustrating an operation when data is deleted in the multi-type air conditioning system of Fig. 2; and
Figure 6 is a diagram schematically illustrating a data structure integrating the plurality of multi-type air conditioning systems in Fig. 2.

Description will now be given in detail to the preferred embodiments of the present invention, examples of which are illustrated in the accompanying drawings.

Figure 2 is a block diagram illustrating the organization of a multi-type air conditioning system to which the data writing system and method according to the present invention are applied.

As shown in Fig. 2, there are provided a data writing unit 100, a database 200, a local controller 300, a gateway 400, a plurality of outdoor units ODU and indoor units IDU.

The data writing unit 100 writes setting information and status information related to each device by tabulating a hierarchical relationship between the devices using reference checking.

Here, when data is to be added, the data writing unit 100 abstracts an identifier from the corresponding data, and by using the abstracted identifier, blocks data addition by a violation of a foreign key restriction in case the corresponding data is determined to be unreferenced data, and adds the corresponding data if by using the abstracted identifier the corresponding data is determined not to be redundant data and is also determined to be a referenced data. When data is to be deleted, the data writing unit 100 deletes the corresponding data together with any data referring to the corresponding data.

The database 200 stores a gateway information table, an outdoor unit information table, an indoor unit information table(s), indoor/outdoor status tables, and a data table for various informational contents concerning the system.

The local controller 300 is connected to a plurality of outdoor and indoor units through the gateways, and serves to control the outdoor and indoor units and to perform monitoring thereof.

Each gateway 400 is connected to an outdoor unit at a lower hierarchical level thereto and to the local controller 300 at an upper hierarchical level thereto, and serves to transmit control commands of the local controller 300 to the lower level outdoor/indoor units and to transmit control results or status monitoring data to the local controller.

And, the plurality of outdoor and indoor units perform the commands of the local controller 300 and the monitoring, and are connected to the gateway 400 at an upper level thereto.

The operation of the system and method according to the present invention will be described in detail with reference to the accompanying drawings.

First, the database 200 implemented according to the present invention stores the gateway information table, the outdoor unit information table, the indoor unit information tables, the indoor/outdoor status tables, and the data table for various informational contents.

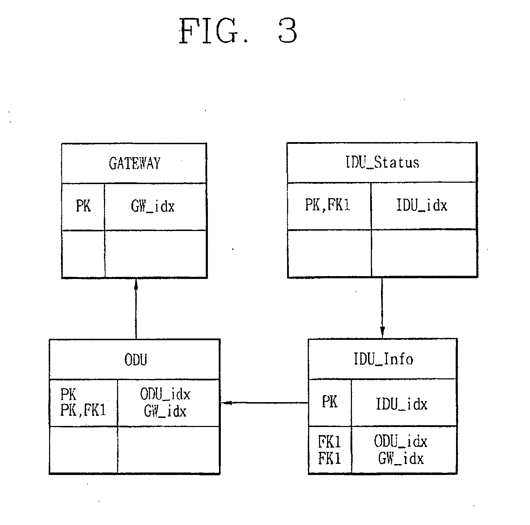

Here, according to the present invention, as shown in Fig. 3, in order to express data having a hierarchical association as relational data, an identifier of an upper entity and a primary key are included in the data, thereby specifying the data as a foreign key.

In such state, the local controller 300 generates control data to control the plurality of outdoor/indoor units based on status information and setting information received from the gateway 400 related to the plurality of outdoor/indoor units, and then transmits the generated control data to the corresponding outdoor/indoor units through the gateway.

Here, the data writing unit 100 writes status information and setting information data received in the local controller 300 by tabulating the hierarchical relationships between the devices through reference, and thus, the written data is stored in corresponding tables of the database 200.

In addition, the data writing unit 100 writes the control data generated in the local controller 300 by tabulating the hierarchical relationships between the devices through reference, and then supplies the written data to the local controller 300.

Accordingly, the local controller 300 transmits the control data to the corresponding indoor and outdoor units via the corresponding gateway 400.

Here, the data writing operation of the data writing unit 100 will now be given in detail.

First, the data writing unit 100 specifies a primary key of the gateway table as a foreign key to setting information and status information related to the outdoor unit ODU, and specifies a primary key of the setting information and status information related to the outdoor unit ODU as a foreign key to setting information and status information related to the indoor unit IDU, and also specifies a primary key of the setting information and status information related to the indoor unit IDU as a foreign key to setting information and status information related to the indoor unit IDU for monitoring and other informational contents of each multi-type air conditioner. The primary key and foreign key are expressed as an index.

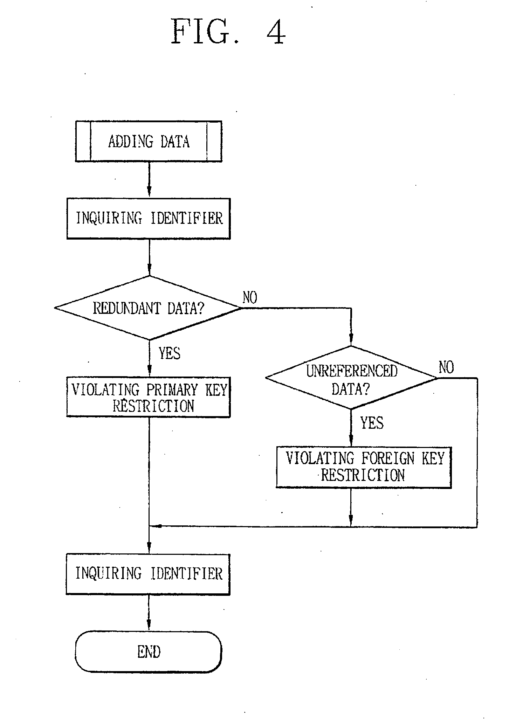

Description of an operation when the data writing unit 100 adds data will be given with reference to Fig. 4.

First, an identifier of the corresponding data is abstracted, and if the corresponding data is determined by using the abstracted identifier to be redundant data, data addition is blocked by a violation of a primary key restriction. In addition, if the corresponding data is determined by using the abstracted identifier to be unreferenced data, data addition is blocked by a violation of a foreign key restriction. Further, if the corresponding data is determined by using the abstracted identifier to be a referenced data, and not to be a redundant data, then the corresponding data is added into the relevant table.

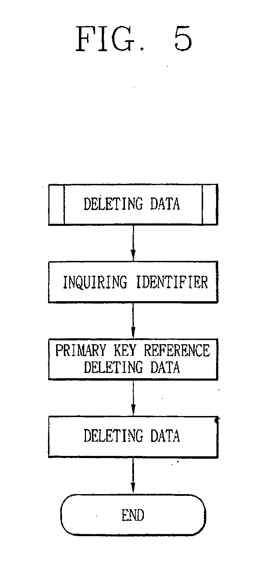

Description of an operation when the data writing unit 100 deletes data will next be given with reference to Fig. 5.

First, in a data deletion mode, an identifier of the corresponding data to be deleted is abstracted, and by using the abstracted identifier the corresponding data together with any data referring to the corresponding data is deleted.

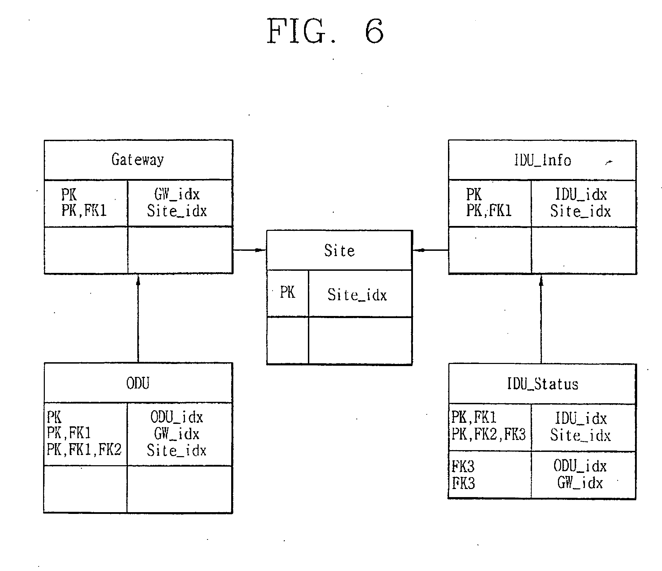

Figure 6 is a schematic view illustrating the data writing method when data of a plurality of multi-type air conditioning systems are integrated.

That is, if the data concerning a plurality of multi-type air conditioning systems is to be implemented as an integrated database, a system information table may be added into the database, and a foreign key may be added to data tables of each hierarchy.

Figure 6 shows another embodiment of the data writing method for the multi-type air conditioning system according to the present invention. Using the hierarchical relationship between the primary key and the reference key, management can be possible by association of key values.

That is, a lower index is expressed by an upper index and a lower unit identifier. Here, hierarchical data is expressed together with an index key.

The above-mentioned method may express the hierarchical data without using a foreign key, but there is a need to manage for integrity.

The above-described data writing system and method for a multi-type air conditioning system according to the present invention can write data regarding setting information and status information for each device by tabulating the hierarchical relationship between devices using reference.

Here, the data writing method according to the present invention can be applied to each device to write data, by implementing the data writing unit in the plurality of indoor units IDU and outdoor units ODU, the gateway, and the like.

The data writing system and method for a multi-type air conditioning system according to the present invention can be applied to a system comprised of multi-type air conditioners and single-type air conditioners, as well as to a system comprised of only multi-type air conditioners.

The preferred embodiments of the present invention have been described in detail with reference to the drawings; however, they should not be construed as limiting the scope of the present invention. Also, it will be obvious to those skilled in the art that variations may be implemented within the scope as defined by the appended claims.

As described above, the data writing system and method for a multi-type air conditioning system according to the present invention associates data related to each system device (for data that was otherwise independently maintained) and performs management thereof, while allowing the deletion of any redundant data, and writes data to form a hierarchical structure through reference, thereby enhancing service inquiry and service usage performance.

The foregoing embodiments and advantages are merely exemplary and are not to be construed as limiting the present disclosure. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims.

## Claims

1. A data writing system for a multi-type air conditioning system having one or more multi-type air conditioner groups provided with a local controller (300) connected to multi-type air conditioners via a gateway (400), and configured to format setting information and status information related to each of the one or more multi-type air conditioner groups as a table, comprising:
a data writing unit (100) configured to write the setting information and status information by tabulating a hierarchical relationship between devices of the air conditioning system through a referential method with a primary key and a foreign key; and
a database (200) configured to store table information written by the data writing unit_{,}
wherein the setting information and status information include an identifier of an upper entity and the primary key, and are specified using the foreign key.

2. The system of claim 1, wherein the data writing unit (100) expresses the primary key and foreign key as an index.

3. The system of claim 1, wherein the table information includes a database which stores one or more of a gateway information table, an outdoor unit information table, an indoor unit information table, indoor/outdoor status tables, and a data table for various informational contents concerning the air conditioning system.

4. The system of claim 3, wherein the data writing unit (100) specifies a primary key of the gateway information table as a foreign key for setting information and status information related to an outdoor unit (ODU) of the multi-type air conditioning system.

5. The system of claim 4, wherein the data writing unit (100) specifies a primary key of the setting information and status information related to the outdoor unit as a foreign key for setting information and status information related to an indoor unit (IDU) of the multi-type air conditioning system.

6. The system of claim 5, wherein the data writing unit (100) specifies a primary key of the setting information and status information related to the indoor unit (IDU) as a foreign key for setting information and status information related to the indoor unit (IDU) for monitoring and other informational contents of the multi-type air conditioning system.

7. The system of claim 1, wherein when data is to be added, the data writing unit (100) abstracts an identifier from corresponding data, and by using the abstracted identifier, blocks data addition by a violation of a primary key restriction if the corresponding data is determined to be redundant data.

8. The system of claim 1, wherein when data is to be added, the data writing unit abstracts an identifier from corresponding data, and by using the abstracted identifier, blocks data addition by a violation of a foreign key restriction if the corresponding data is determined to be unreferenced data.

9. The system of claim 1, wherein when data is to be added, the data writing unit (100) abstracts an identifier from corresponding data and adds the corresponding data if the corresponding data is determined by using the abstracted identifier to be referenced data, and not redundant data.

10. The system of any of claims 1 to 9, wherein when data is to be deleted, the data writing unit deletes corresponding data together with any data referring to the corresponding data.

11. A data writing method for a multi-type air conditioning system wherein setting information and status information related to each of one or more multi-type air conditioner groups is contained in a table, comprising:
writing the setting information and status information by tabulating a hierarchical relationship between devices of the multi-type air conditioning system through a referential method with a primary key and a foreign key; and
storing the written data in the table,
wherein the writing the setting information and status information comprises specifying the primary key and an identifier of a higher level entity as a foreign key.

12. The data writing method of claim 11, wherein the writing the setting information and status information comprises:
writing setting information and status information related to an outdoor unit by specifying a primary key of a gateway table as a foreign key;
writing setting information and status information related to an indoor unit by specifying a primary key of the setting information and status information related to the outdoor unit as a foreign key; and
writing setting information and status information related to the indoor unit for monitoring and other informational contents of the multi-type air conditioning system by specifying a primary key of the setting information and status information related to the indoor unit as a foreign key.

13. The data writing method of claim 11, wherein when data is to be added, an identifier of corresponding data is abstracted, and if the corresponding data is determined by using the abstracted identifier to be redundant data, data addition is blocked by a violation of a primary key restriction.

14. The data writing method of claim 11, wherein when data is to be added, an identifier of corresponding data is abstracted, and if the corresponding data is determined by using the abstracted identifier to be unreferenced data, data addition is blocked by a violation of a foreign key restriction.

15. The data writing method of claim 11, wherein when data is to be added, an identifier of the corresponding data is abstracted, and if the corresponding data is determined by using the abstracted identifier to be referenced data, and not redundant data, the corresponding data is added.

16. The data writing method of any of claims 11 to 15, wherein when data is to be deleted, corresponding data is deleted together with any data referring to the corresponding data.

## Patentansprüche

1. Datenschreibsystem für ein Multi-Klimatisierungssystem mit einer oder mehreren Multi-Klimaanlagegruppen, die einen lokalen Controller (300) aufweisen, der über ein Gateway (400) mit Multi-Klimaanlagen verbunden und dafür konfiguriert ist, Setzinformation und Zustandsinformation, die mit jeder der einen oder mehreren Multi-Klimaanlagegruppen in Beziehung stehen, als eine Tabelle zu formattieren, mit:
einer Datenschreibeinheit (100), die dafür konfiguriert ist, die Setzinformation und die Zustandsinformation durch tabularische Darstellung einer hierarchischen Beziehung zwischen Geräten des Klimatisierungssystems durch ein referentielles Verfahren mit einem Primärschlüssel und einem Fremdschlüssel zu schreiben; und
einer Datenbank (200), die dafür konfiguriert ist, durch die Datenschreibeinheit geschriebene Tabelleninformation zu speichern,
wobei die Setzinformation und die Zustandsinformation eine Identifizierung einer übergeordneten Entität und den Primärschlüssel enthalten und unter Verwendung des Fremdschlüssels spezifiziert werden.

2. System nach Anspruch 1, wobei die Datenschreibeinheit (100) den Primärschlüssel und den Fremdschlüssel als einen Index darstellt.

3. System nach Anspruch 1, wobei die Tabelleninformation eine Datenbank enthält, die eine oder mehrere der folgenden Tabellen speichert: eine Gateway-Informationstabelle, eine Außeneinheit-Informationstabelle, eine Inneneinheit-Informationstabelle, eine Innenraum-/Außenraumzustandtabelle und eine Datentabelle für verschiedene Informationsinhalte, die mit dem Klimatisierungssystem in Beziehung stehen.

4. System nach Anspruch 3, wobei die Datenschreibeinheit (100) einen Primärschlüssel der Gateway-Informationstabelle als einen Fremdschlüssel für Setzinformation und Zustandsinformation spezifiziert, die mit einer Außeneinheit (ODU) des Multi-Klimatisierungssystems in Beziehung stehen.

5. System nach Anspruch 4, wobei die Datenschreibeinheit (100) einen Primärschlüssel der Setzinformation und der Zustandsinformation, die mit der Außeneinheit in Beziehung stehen, als einen Fremdschlüssel für Setzinformation und Zustandsinformation spezifiziert, die mit einer Inneneinheit (IDU) des Multi-Klimatisierungssystems in Beziehung stehen.

6. System nach Anspruch 5, wobei die Datenschreibeinheit (100) einen Primärschlüssel der Setzinformation und der Zustandsinformation, die mit einer Inneneinheit (IDU) in Beziehung stehen, als einen Fremdschlüssel für Setzinformation und Zustandsinformation, die mit der Inneneinheit (IDU) in Beziehung stehen, für Überwachungs- und andere Informationsinhalte des Multi-Klimatisierungssystem spezifiziert.

7. System nach Anspruch 1, wobei, wenn Daten hinzugefügt werden sollen, die Datenschreibeinheit (100) eine Identifizierung von entsprechenden Daten abstrahiert und unter Verwendung der abstrahierten Identifizierung das Hinzufügen von Daten aufgrund einer Verletzung einer Primärschlüsseleinschränkung (Primary Key Restriction) blockiert, wenn festgestellt wird, dass die entsprechenden Daten redundante Daten sind.

8. System nach Anspruch 1, wobei, wenn Daten hinzugefügt werden sollen, die Datenschreibeinheit eine Identifizierung von entsprechenden Daten abstrahiert und unter Verwendung der abstrahierten Identifizierung das Hinzufügen von Daten aufgrund einer Verletzung einer Fremdschlüsseleinschränkung blockiert, wenn festgestellt wird, dass die entsprechenden Daten unreferenzierte Daten sind.

9. System nach Anspruch 1, wobei, wenn Daten hinzugefügt werden sollen, die Datenschreibeinheit (100) eine Identifizierung von entsprechenden Daten abstrahiert und die entsprechenden Daten hinzufügt, wenn unter Verwendung der abstrahierten Identifizierung festgestellt wird, dass die entsprechenden Daten referenzierte Daten und keine redundanten Daten sind.

10. System nach einem der Ansprüche 1 bis 9, wobei, wenn Daten gelöscht werden sollen, die Datenschreibeinheit die entsprechenden Daten zusammen mit jeglichen Daten löscht, die auf die entsprechenden Daten verweisen.

11. Datenschreibverfahren für ein Multi-Klimatisierungssystem, wobei Setzinformation und Zustandsinformation, die mit jeder von einer oder mehreren Multi-Klimaanlageegruppen in Beziehung stehen, in einer Tabelle gespeichert sind, mit den Schritten:
Schreiben der Setzinformation und der Zustandsinformation durch tabularische Darstellung einer hierarchischen Beziehung zwischen Geräten des Multi-Klimatisierungssystems durch ein referentielles Verfahren mit einem Primärschlüssel und einem Fremdschlüssel; und
Speichern der geschriebenen Daten in die Tabelle,
wobei das Schreiben der Setzinformation und der Zustandsinformation das Spezifizieren des Primärschlüssels und einer Identifizierung einer übergeordneten Entität als einen Fremdschlüssel aufweist.

12. Verfahren nach Anspruch 11, wobei das Schreiben der Setzinformation und der Zustandsinformation aufweist:
Schreiben von Setzinformation und Zustandsinformation, die mit einer Außeneinheit in Beziehung stehen, durch Spezifizieren eines Primärschlüssels einer Gateway-Tabelle als einen Fremdschlüssel;
Schreiben von Setzinformation und Zustandsinformation, die mit einer Inneneinheit in Beziehung stehen, durch Spezifizieren eines Primärschlüssels der Setzinformation und der Zustandsinformation, die mit der Außeneinheit in Beziehung stehen, als einen Fremdschlüssel; und
Schreiben von Setzinformation und Zustandsinformation, die mit einer Inneneinheit in Beziehung stehen, für Überwachungs- und andere Informationsinhalte des Multi-Klimatisierungssystems durch Spezifizieren eines Primärschlüssels der Setzinformation und der Zustandsinformation, die mit der Inneneinheit in Beziehung stehen, als einen Fremdschlüssel.

13. Verfahren nach Anspruch 11, wobei, wenn Daten hinzugefügt werden sollen, eine Identifizierung der entsprechenden Daten abstrahiert wird, und, wenn unter Verwendung der abstrahierten Identifizierung festgestellt wird, dass die entsprechenden Daten redundante Daten sind, das Hinzufügen von Daten aufgrund einer Verletzung einer Primärschlüsseleinschränkung blockiert wird.

14. Verfahren nach Anspruch 11, wobei, wenn Daten hinzugefügt werden sollen, eine Identifizierung der entsprechenden Daten abstrahiert wird, und, wenn unter Verwendung der abstrahierten Identifizierung festgestellt wird, dass die entsprechenden Daten unreferenzierte Daten sind, das Hinzufügen der Daten aufgrund einer Verletzung einer Fremdschlüsseleinschränkung blockiert wird.

15. Verfahren nach Anspruch 11, wobei, wenn Daten hinzugefügt werden sollen, eine Identifizierung der entsprechenden Daten abstrahiert wird, und, wenn unter Verwendung der abstrahierten Identifizierung festgestellt wird, dass die entsprechenden Daten referenzierte Daten und keine redundanten Daten sind, die entsprechenden Daten hinzugefügt werden.

16. Verfahren nach einem der Ansprüche 11 bis 15, wobei, wenn Daten gelöscht werden sollen, die entsprechenden Daten zusammen mit jeglichen Daten gelöscht werden, die auf die entsprechenden Daten verweisen.

## Revendications

1. Système d'écriture de données pour un système de climatisation à unités multiples ayant un ou plusieurs groupes de climatiseurs à unités multiples pourvu d'un dispositif de commande local (300) relié aux climatiseurs à unités multiples par l'intermédiaire d'une passerelle (400), et conçu pour mettre des informations de paramétrage et des informations d'état liées à chacun des groupes de climatiseurs à unités multiples dans un format de table, et comprenant :
une unité d'écriture de données (100) conçue pour écrire les informations de paramétrage et les informations d'état par tabulation d'une relation hiérarchique entre des dispositif du système de climatisation au travers d'un procédé référentiel comportant une clé primaire et une clé étrangère ; et
une base de données (200) conçue pour stocker les informations tabulaires écrites par l'unité d'écriture de données,
dans lequel les informations de paramétrage et les informations d'état comprennent un identifiant d'une entité supérieure et la clé primaire, et sont indiquées au moyen de la clé étrangère.

2. Système selon la revendication 1, dans lequel l'unité d'écriture de données (100) exprime la clé primaire et la clé étrangère sous la forme d'un index.

3. Système selon la revendication 1, dans lequel les informations tabulaires comprennent une base de données qui stocke une ou plusieurs d'une table d'informations sur la passerelle, d'une table d'informations sur les unités extérieures, d'une table d'informations sur les unités intérieures, de tables des états intérieur/extérieur, et d'une table de données pour divers contenus informatifs concernant le système de climatisation.

4. Système selon la revendication 3, dans lequel l'unité d'écriture de données (100) indique une clé primaire de la table d'informations sur la passerelle sous la forme d'une clé étrangère pour les informations de paramétrage et les informations d'état liées à une unité extérieure (ODU) du système de climatisation à unités multiples.

5. Système selon la revendication 4, dans lequel l'unité d'écriture de données (100) indique une clé primaire des informations de paramétrage et des informations d'état liées à l'unité extérieure sous la forme d'une clé étrangère pour les informations de paramétrage et les informations d'état liées à une unité intérieure (IDU) du système de climatisation à unités multiples.

6. Système selon la revendication 5, dans lequel l'unité d'écriture de données (100) indique une clé primaire des informations de paramétrage et des informations d'état liées à l'unité intérieure (IDU) sous la forme d'une clé étrangère pour les informations de paramétrage et les informations d'état liées à l'unité intérieure (IDU) pour des contenus de surveillance et autres contenus informatifs du système de climatisation à unités multiples.

7. Système selon la revendication 1, dans lequel lorsque des données doivent être ajoutées, l'unité d'écriture de données (100) extrait un identifiant à partir des données correspondantes, et au moyen de l'identifiant extrait, bloque l'ajout de données par une violation d'une restriction sur la clé primaire s'il est déterminé que les données correspondantes sont des données redondantes.

8. Système selon la revendication 1, dans lequel lorsque des données doivent être ajoutées, l'unité d'écriture de données extrait un identifiant à partir des données correspondantes, et au moyen de l'identifiant extrait, bloque l'ajout de données par une violation d'une restriction sur la clé étrangère s'il est déterminé que les données correspondantes sont des données non référencées.

9. Système selon la revendication 1, dans lequel lorsque des données doivent être ajoutées, l'unité d'écriture de données (100) extrait un identifiant à partir des données correspondantes et ajoute les données correspondantes s'il est déterminé grâce à l'identifiant extrait que les données correspondantes sont des données référencées et non des données redondantes.

10. Système selon l'une quelconque des revendications 1 à 9, dans lequel lorsque des données doivent être supprimées, l'unité d'écriture de données supprime les données correspondantes conjointement avec toutes les données se rapportant aux données correspondantes.

11. Procédé d'écriture de données pour un système de climatisation à unités multiples dans lequel des informations de paramétrage et des informations d'état liées à chacun d'un ou plusieurs groupes de climatiseurs à unités multiples sont contenues dans une table, consistant à :
écrire les informations de paramétrage et les informations d'état par tabulation d'une relation hiérarchique entre des dispositif du système de climatisation à unités multiples au travers d'un procédé référentiel comportant une clé primaire et une clé étrangère ; et
stocker les données écrites dans la table,
dans lequel l'écriture des informations de paramétrage et des informations d'état consiste à indiquer la clé primaire et un identifiant d'une entité supérieure sous la forme d'une clé étrangère.

12. Procédé d'écriture de données selon la revendication 11, dans lequel l'écriture des informations de paramétrage et des informations d'état consiste à :
écrire les informations de paramétrage et les informations d'état liées à une unité extérieure en indiquant une clé primaire d'une table de passerelle sous la forme d'une clé étrangère ;
écrire les informations de paramétrage et les informations d'état liées à une unité intérieure en indiquant une clé primaire des informations de paramétrage et des informations d'état liées à l'unité extérieure sous la forme d'une clé étrangère ; et
écrire les informations de paramétrage et les informations d'état liées à l'unité intérieure pour des contenus de surveillance et autres contenus informatifs du système de climatisation à unités multiples en indiquant une clé primaire des informations de paramétrage et des informations d'état liées à l'unité intérieure sous la forme d'une clé étrangère.

13. Procédé d'écriture de données selon la revendication 11, dans lequel lorsque des données doivent être ajoutées, un identifiant des données correspondantes est extrait, et s'il est déterminé grâce à l'identifiant extrait que les données correspondantes sont des données redondantes, l'ajout de données est bloqué par une violation d'une restriction sur la clé primaire.

14. Procédé d'écriture de données selon la revendication 11, dans lequel lorsque des données doivent être ajoutées, un identifiant des données correspondantes est extrait, et s'il est déterminé grâce à l'identifiant extrait que les données correspondantes sont des données non référencées, l'ajout de données est bloqué par une violation d'une restriction sur la clé étrangère.

15. Procédé d'écriture de données selon la revendication 11, dans lequel lorsque des données doivent être ajoutées, un identifiant des données correspondantes est extrait, et s'il est déterminé grâce à l'identifiant extrait que les données correspondantes sont des données référencées et non des données redondantes, les données correspondantes sont ajoutées.

16. Procédé d'écriture de données selon l'une quelconque des revendications 11 à 15, dans lequel lorsque des données doivent être supprimées, les données correspondantes sont supprimées conjointement avec toutes les données se rapportant aux données correspondantes.
